# EUROPEAN PATENT APPLICATION

(11) **EP 2 575 019 A1**
(43) Date of publication of application: **03.04.2013**
(21) Application number: 11306269.9
(22) Date of filing: 30.09.2011
(51) Int. Cl.: G06F 3/048

(54) **Method for bookmarking a section of an electronic content**

(71) Applicant: FRANCE TELECOM, 75015 Paris (FR)
(72) Inventor: Nozaki, Hidenari, Ibaraki, 3001514 (JP); Zemek, Radim, 1890013 Tokyo (CZ)

(57) **Abstract**

The invention relates to a method for marking a first section of a browsable content displayed on a graphical user interface (30) of an electronic device (1), said method comprising the steps of :
- detecting a first input on a first specific area (10,11,12,13) of the graphical user interface, the detection of the first input triggering a browsing mode,
- storing the first section of the browsable content,
- detecting a second input on a second specific area (20) of the graphical user interface different from the first specific area, the second input causing a browsing through the content,
- detecting a third input on the first specific area (10,11,12,13) of the graphical user interface, the detection of the third input terminating the browsing mode,
- displaying the first section of the browsable content on the graphical user interface.

## Description

The present invention generally relates to e-book readers, and more particularly to content bookmarking methods.

Even though books or other documents are readily available in electronic form, readers tend to prefer reading such documents in printed form. One reason to this preference is that content in electronic form lacks the visual cues present in a printed document that help a reader remember the location of certain passages within the document when browsing through the document.

Consequently when reading an electronic document, readers have difficulties in locating particular passages.

In order to overcome this drawback, bookmarking solutions have been developed. One example of such a bookmarking solution consists in placing visual markers in the document in electronic form in order to mark sections of interest in the document. These visual markers maintain a fixed position in the document when the user scrolls or browses through the document.

Nevertheless, such a solution still needs user's intervention for locating the visual mark in the document. Indeed, once a visual mark is placed in the document, the user can browse through the document knowing he can find the passage of the document he marked again by looking for the visual mark, but in order to find the marked passage, the user must browse through the document in order to find the visual mark again.

Hence there is a need for a solution enabling retrieving a specific passage in a document in electronic form with minimal user intervention.

To that extent, the present method relates to a method for marking a first section of a browse-able content displayed on a graphical user interface of an electronic device, said method comprising the steps of :
- detecting a first input on a first specific area of the graphical user interface, the detection of the first input triggering a browsing mode,
- storing the first section of the browse-able content,
- detecting a second input on a second specific area of the graphical user interface different from the first specific area, the second input causing a browsing through the content,
- detecting a third input on the first specific area of the graphical user interface, the detection of the third input terminating the browsing mode,
- displaying the first section of the browse-able content on the graphical user interface.

Such a method enables retrieving a specific section of a document in electronic form with minimal user intervention.

The method of the invention defines a browsing mode in which once the currently displayed section of a document is stored, the user can browse through the document and upon terminating the browsing mode, the section of the document that was stored when entering the browsing mode is displayed again.

Hence, there is no user's intervention required to retrieve the marked section of the document contrary to what happens in the prior art.

According to a feature of the method of the invention, the first input is an input of a duration higher or equal to a pre-determined threshold duration.

The first input is for example a clutch gesture.

According to a feature of the method of the invention, the position of the first input on the first specific area of the graphical user interface is intact.

The user holds his finger on the first specific area of the graphical user interface for a pre-determined duration to trigger the browsing mode.

According to a feature of the method of the invention, the third input on the first specific area of the graphical user interface is a release of the first input on the first specific area of the graphical user interface.

By removing his finger from the first specific area of the graphical user interface, the user terminates the browsing mode.

According to a feature of the method of the invention, the second input on the second specific area of the graphical user interface is a scrolling input.

The invention concerns also an electronic device capable of marking a first section of a browse-able content displayed on a graphical user interface of the device, said device comprising means for:
- detecting a first input on a first specific area of the graphical user interface, the detection of the first input triggering a browsing mode,
- storing the first section of the browse-able content,
- detecting a second input on a second specific area of the graphical user interface different from the first specific area, the second input causing a browsing through the content,
- detecting a third input on the first specific area of the graphical user interface, the detection of the third input terminating the browsing mode,
- displaying the first section of the browse-able content on the graphical user interface.

Such a device is for example a tablet or a mobile phone.

Finally, one object of the invention concerns a computer program, in particular a computer program on or in an information medium or memory, suitable for implementing the method for wirelessly transferring data between a first and at least a second device by means of a radio signal of a pre-determined frequency object of the invention. This program can use any programming language, and be in the form of source code, binary code, or of code intermediate between source code and object code such as in a partially compiled form, or in any other desirable form for implementing the configuration method according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

The present system and method are explained in further detail, and by way of example, with reference to the accompanying drawings wherein:
Figure 1 represents a first embodiment of an electronic device capable of running the method of the invention,
Figure 2 represents a second embodiment of an electronic device capable of running the method of the invention,
Figure 3 shows a diagram representing the steps of the method of the invention as experienced by the user,
Figure 4 shows a diagram representing the steps of the method of the invention when it is run by the electronic device,
Figure 5 represents an electronic device capable of running the method of the invention.

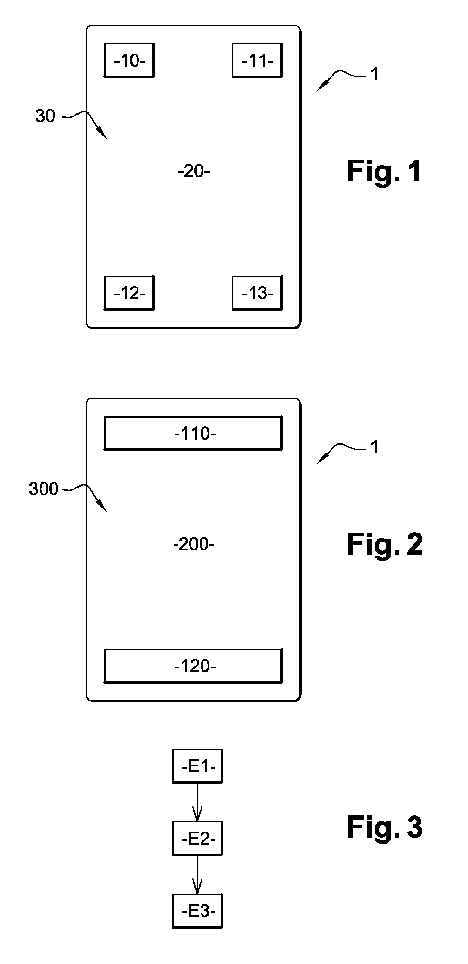

**Figure 1** represents a first embodiment of an electronic device 1 capable of running the method of the invention.

Such an electronic device 1 is for example a Smartphone, a tablet, a laptop, etc. the electronic device 1 comprises a graphical user interface 30, e.g. a touch screen.

In this embodiment, four specific areas 10, 11, 12, 13 of the graphical user interface 30 are defined. They are located for example in the four corners of the graphical user interface 30 when the graphical user interface 30 is of rectangular shape. The rest of the surface 20 of the graphical user interface 30 constitute another specific area of the graphical user interface 30.

**Figure 2** represents a second embodiment of an electronic device 1 capable of running the method of the invention.

The electronic device 1 comprises a graphical user interface 300. In this embodiment, two specific areas 110, 120 of the graphical user interface are defined. They are of rectangular shape and are located for example at the top and the bottom of the graphical user interface 300 when the graphical user interface 300 is of rectangular shape. The rest of the surface 200 of the graphical user interface 300 constitute another specific area of the graphical user interface 30.

There can be more than two or four specific area 10, 11, 12, 13, 110 and 120; and they be located anywhere on the graphical user interface 30, 300.

**Figure 3** shows a diagram representing the steps of the method of the invention as experienced by the user.

In a step E1, an electronic document is displayed on the graphical user interface 30, 300. Such a document is for example a document comprising a plurality of pages such as an e-book, or a document that has a content large than the size of the graphical user interface 30, 300, such as a webpage.

The user of the electronic device 1 whishes to browse through the document displayed on the graphical user interface 30, 300 while marking a first section of the document, e.g. a specific page of an e-book or a specific section of a webpage.

In a step E2, the user touches one of the specific area 10, 11, 12, 13, 110 or 120 of the graphical user interface 30, 300. This touch gesture may be a touch and hold gesture : the user holds his finger on the first specific area 10, 11, 12, 13, 110 or 120 of the graphical user interface 30, 300 for a pre-determined duration.

In a step E3, the user touches the other specific area 20, 200 in a scrolling gesture in order to browse through the content of the document. Depending on the nature of the document, the user can scroll horizontally or vertically. For example, if the document is an e-book, the user will scroll horizontally. If the document is a webpage, the user will scroll vertically.

When the user wants to go back to the first section of the document, he releases his touch on the specific area 10, 11, 12, 13, 110 or 120 of the graphical user interface 30, 300. This gesture triggers the display of the first section of the document on the graphical user interface 30, 300.

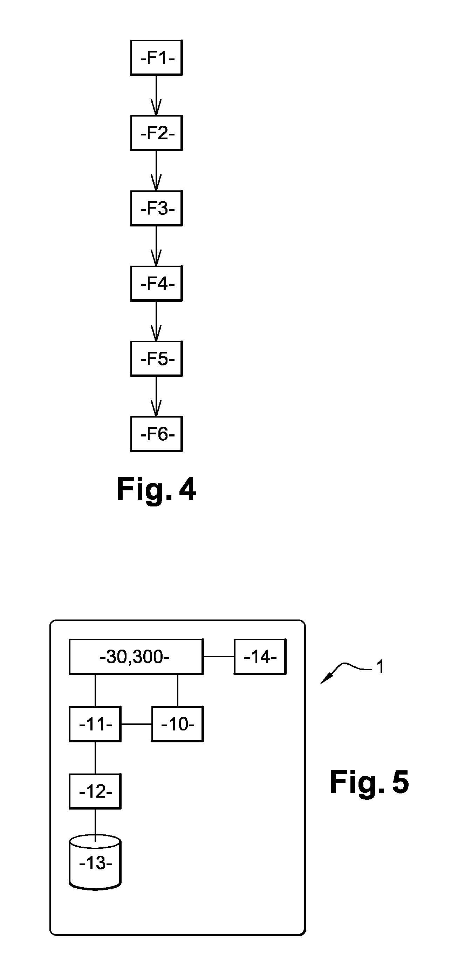

**Figure 4** shows a diagram representing the steps of the method of the invention when it is run by the electronic device 1.

In a step F1 , a first input on a first specific area 10, 1 1 , 12, 13, 110 or 120 of the graphical user interface 30, 300 is detected by detecting means of the electronic device 1. The detection of the first input triggers a browsing mode.

The first input is an input of a duration higher or equal to a pre-determined threshold duration T. In a step F2, the duration of the first input is measure and compared to the threshold duration T. If the duration of the first input is higher or equal to the threshold duration T, then the electronic device 1 enters in the browsing mode. The position of the first input on the first specific area 10, 1 1 , 12, 13, 14, 110 or 120 of the graphical user interface30, 300 is intact. Such an input is for example a touch and hold input or a clutch input. A clutch input is an input with a pre-determined duration, i.e. it is not necessary to maintain the touch longer than the pre-determined duration.

In a step F3, a first section of the document, displayed on the graphical user interface 30, 300, is stored in storing means of the electronic device 1.

In a step F4, a second input on a second specific area 20, 200 of the graphical user interface 30, 300, is detected by detecting means of the electronic device 1. This second input causes a browsing through the content. Others sections of the document are then displayed on the graphical user interface 30, 300. The second input on the second specific area 20, 200 of the graphical user interface 30, 300 is a scrolling input or flipping input causing a browsing in the document.

In a step F5, a third input on the first specific area 10, 11, 12, 13, 110 or 120 of the graphical user interface 30, 300 is detected by the detection means of the electronic device 1. The detection of the third input terminates the browsing mode. The third input on the first specific area 10, 11, 12, 13, 110 or 120 of the graphical user interface 30, 300 is a release of.the first input.

In a step F6, the first section of the document is displayed on the graphical user interface 30, 300.

Once the electronic device enters the browsing mode, functionalities such as zooming on a section of the document are available. Zooming on a section of a displayed document is usually done by detecting a pinching gesture, i.e. the detection of two simultaneous inputs of the graphical user interface 30, 300, the inputs moving toward or away from one another depending on whether the user whishes to zoom in or out.

Upon detection of two simultaneous inputs on the second specific area 20, 200 of the graphical user interface 30, 300, the device 1, while in the browsing mode, enters a zooming mode.

Once the electronic device enters the browsing mode, functionalities such as using software links, e.g. hypertext links, URL, etc. are available as well.

Upon detection of an input on the area of the graphical user interface 30, 300,on which the software link is displayed, the device 1, while in the browsing mode, launches another application, for example internet browser in order to displayed the linked content. When terminating the application, the device 1 terminates the browsing mode and displays the first section of the content.

**Figure 5** represents an electronic device 1 capable of running the method for marking a first section of a browsable content displayed on the graphical user interface30, 300 the electronic device 1.

The electronic device 1 comprises detecting means 10 of a first input on a first specific area 10, 11, 12, 13, 110 or 120 of the graphical user interface 30, 300. The detecting means 10 are linked to the graphical user interface 30, 300.

The first input being an input of a duration higher or equal to a pre-determined threshold duration T, the electronic device 1 comprises means for measuring 11 the duration of the first input connected to the graphical user interface 30, 300 and the means 10. Connected to the means 11, the electronic device comprises means for comparing 12 the measured duration of the first input to a threshold duration T.

Connected to the means 12, the electronic device 1 comprises means for storing 13 a first section of the document displayed on the graphical user interface 30, 300.

The electronic device 1 comprises detecting means 14 of a second input on a second specific area 20, 200 of the graphical user interface 30, 300, connected to the graphical user interface 30, 300. This second input causes a browsing through the content. Others sections of the document are then displayed on the graphical user interface 30, 300.

The detecting means 10 of the first input on a first specific area 10, 1 1 , 12, 13, 110 or 120 of the graphical user interface 30, 300 detects the third input as well.

## Claims

1. Method for marking a first section of a browsable content displayed on a graphical user interface of an electronic device, said method comprising the steps of :
- detecting a first input on a first specific area of the graphical user interface, the detection of the first input triggering a browsing mode,
- storing the first section of the browsable content,
- detecting a second input on a second specific area of the graphical user interface different from the first specific area, the second input causing a browsing through the content,
- detecting a third input on the first specific area of the graphical user interface, the detection of the third input terminating the browsing mode,
- displaying the first section of the browsable content on the graphical user interface.

2. The method of claim 2, wherein the first input is an input of a duration higher or equal to a pre-determined threshold duration.

3. The method of claim 2, wherein the position of the first input on the first specific area of the graphical user interface is intact.

4. The method of claim 3, wherein the third input on the first specific area of the graphical user interface is a release of the first input on the first specific area of the graphical user interface.

5. The method of claim 1, wherein the second input on the second specific area of the graphical user interface is a scrolling input.

6. An electronic device capable of marking a first section of a browse-able content displayed on a graphical user interface of the device, said device comprising means for :
- detecting a first input on a first specific area of the graphical user interface, the detection of the first input triggering a browsing mode,
- storing the first section of the browsable content,
- detecting a second input on a second specific area of the graphical user interface different from the first specific area, the second input causing a browsing through the content,
- detecting a third input on the first specific area of the graphical user interface, the detection of the third input terminating the browsing mode,
- displaying the first section of the browse-able content on the graphical user interface.

7. Computer program **characterized in that** it comprises program code instructions for the implementation of the steps of the method for marking a first section of a browse-able content as claimed in claim 1 when the program is executed by a processor.
